# EUROPÄISCHE PATENTSCHRIFT

(11) **EP 0 815 466 B1**
(45) Veröffentlichungstag und Bekanntmachung des Hinweises auf die Patenterteilung: **12.12.2001**
(21) Anmeldenummer: 97901553.4
(22) Anmeldetag: 20.01.1997
(51) Int. Cl.: G01S 5/14, G08G 5/04

(54) **EINRICHTUNG ZUR ÜBERWACHUNG DES ABSTANDES ZWEIER OBJEKTE**
DEVICE FOR MONITORING THE DISTANCE BETWEEN TWO OBJECTS
DISPOSITIF POUR SURVEILLER L'ECART ENTRE DEUX OBJETS

(30) Priorität: 20.01.1996 DE 19602053
(43) Veröffentlichungstag der Anmeldung: 07.01.1998
(73) Patentinhaber: Klaschka, Rüdiger, 71263 Weil der Stadt (DE)
(72) Erfinder: Klaschka, Rüdiger, 71263 Weil der Stadt (DE)
(74) Vertreter: Ostertag, Reinhard
(86) Internationale Anmeldenummer: EP9700234
(87) Internationale Veröffentlichungsnummer: WO9726552

(56) Entgegenhaltungen:
- EP-A- 0 565 399
- WO-A-93/01576
- US-A- 4 188 630
- US-A- 5 077 673
- US-A- 5 325 302

## Beschreibung

Die Erfindung betrifft eine Einrichtung zur Überwachung des Abstandes zweier Objekte gemäß dem Oberbegriff des Anspruches 1.

Derartige Einrichtungen sind in Verbindung mit der Überwachung des Abstandes zweier Flugzeuge bekannt und werden unter der Bezeichnung TCAS (Traffic Alert & Collision Avoidance System) von der Fa. Honeywell vertrieben. Bei dieser bekannten Einrichtung wird von den normalen Radareinrichtungen des Flugzeuges Gebrauch gemacht, wobei die Lagedaten von den verschiedenen Flugzeugen über deren Transponder der Radar-Bodenstation übermittelt werden und von dort zusammen mit anderen Daten an alle weiteren im gleichen Luftraumbereich fliegende Flugzeuge übermittelt werden.

Eine ähnliche Einrichtung wird unter der Bezeichnung TCAD (Traffic/Collision Alert Device) von der Fa. Ryan vertrieben. Diese bekannte Einrichtung empfängt und decodiert Transpondersignale und stellt den Luftverkehr im interessierenden Luftraum durch Zeichenfolgen auf einer kleinen Anzeige dar. Auch bei diesem System wird aber von den normalen Radar-Transpondersignalen Gebrauch gemacht.

Die Radar-Luftüberwachung hilft zwar für höher liegende Verkehrsbereiche gut; gerade bei niederen Flughöhen, bei denen eine besonders große Gefahr von gefährlichen Annäherungen von Flugzeugen besteht, arbeitet die Radar-Überwachung und die Übertragung zusmmen mit Radarsignale übertragener Daten aber weniger zufriedenstellend.

Aus der WO 93 01576 A1 ist ein Positionsanzeigesystem zur Positionsüberwachung von Flugzeugen bekannt. Die Flugzeuge sind dort mit GPS-Empfängern und mit VHF-Übertragungseinheiten ausgerüstet Mit den Übertragungseinheiten tauschen die Flugzeuge Lage- und Kursdatensignale sowie den Flugzeugen zugeordnete Identifikationscodes aus. Ein in einem Kommunikationsprozessor enthaltener Mikroprozessor vergleicht die empfangenen Lagedaten mit den Positionsdaten des diesen Mikroprozessor tragenden Flugzeugs. Ein mit dem Kommunikationsprozessor verbundener Computer gibt in Abhängigkeit von automatisch manipulierten Daten aus dem Speicher des Kommunikationsprozessors ein Warnsignal an den Piloten. Bei den Übertragungsvorgängen nutzen die Flugzeuge definierte Zeitscheiben.

Die US 5 077 673 A beschreibt eine Radar-Einrichtung zur Kollisionswarnung im Luftverkehr. Die Fluzeuge weisen hierbei Transponder auf, die Abfragesignale senden und Antwortsignale anderer Flugzeuge empfangen, mittels derer eine Bestimmung der Kollisionsgefährdung durch andere Flugzeuge möglich ist. Die Positionsinformation wird dabei von den Flugzeugen selbst ermittelt. Die Bestimmung der Entfernung zwischen zwei Flugzeugen erfolgt dabei-grob über die Signalstärke des jeweils empfangen Transponder-Antwortsignals, das von einer omnidirektionalen Dipol-Antenne gesendet wird. Die Flughöhe wird durch Höhenmesser an Bord der Flugzeuge bestimmt. Eine Amplitudendiskrimination dient dabei dem Verwerfen der Antwortsignale anderer Flugzeuge.

Durch die vorliegende Erfindung wird eine radarunabhängige Einrichtung zur Überwachung des Abstandes zweier Objekte, von denen sich mindestens eines bewegt, angegeben, bei welcher nur solche Objekte berücksichtigt werden, die sich in vorgegebener näherer Umgebung eines betrachteten Objektes befinden.

Hierzu schafft die Erfindung eine Überwachungseinrichtung mit den im Anspruch 1 angegebenen Merkmalen.

Bei der erfindungsgemäßen Überwachungseinrichtung senden die im Hinblick auf eine gefährliche Annäherung zu überwachenden Objekte ständig Lagedatensignale und ObjektIdentifizierungssignale im VHF-Bereich aus. Das Aussenden dieser Signale erfolgt im wesentlichen mit einer Kugelcharakteristik. Ähnlich arbeiten die verwendeten Empfangseinheiten mit einer Kugelcharakteristik. In den bewegten Objekten sind jeweils Überwachungsrechner enthalten, welche aus den erhaltenen Lagedatensignalen und den eigenen Lagedatensignalen den momentanen Objektabstand berechnen.

In Verbindung mit dem Amplituden-Diskriminatorkreis reduziert sich durch die kugelförmige Sende- und Empfangscharakteristik der Antenne die zu verarbeitende Datenmenge durch das Verwerfen von Sendesignalen entfernter, aber noch innerhalb der Empfangsreichweite liegender Flugzeuge Der Schwellwert wird dabei so gewählt, daß Signale, die von anderen Flugzeugen empfangen werden, die sich in größerer Entfernung als ein vorgegebener Abstand befinden, unterdrückt werden.

Die Lagedatensignale sind im Falle bewegter Objekte jeweils durch eine GPS-Einheit (GPS = Global Positioning System) erstellt, basieren also auf einer Standardbestimmung unter Verwendung der Ausgangssignale einer Vielzahl im Weltraum angeordneter Navigationssatelliten. Die so erhaltene Standortbestimmung ist sehr präzise.
Die GPS-Einheiten sind zwischenzeitlich preisgünstig erhältlich.

Ein weiterer Vorteil der Erfindung ist, daß die GPS-Lagebestimmung und auch die VHF-Lagedatenübermittlung nicht nur in großen Höhen sondern auch in der Nähe der Erdoberfläche gut arbeiten. Man kann somit mit der erfindungsgemäßen Einrichtung gefährliche Annäherungen von Flugzeugen auch in der Nähe und auf der Erdoberfläche überwachen.

Die erfindungsgemäße Einrichtung läßt sich aber auch zur Kollisionsvermeidung bei Schiffen und Landfahrzeugen verwenden.

Schließlich läßt sich die Erfindung auch dazu verwenden, die Annäherung bewegter Objekte an feststehende Hindernisse zu überwachen. Hierzu werden die feststehenden Hindernisse mit die Lagedatensignale und Objekt-Identifizierungssignale enthaltenden Speichern versehen, und die entsprechenden Daten werden laufend aus diesem Speicher augelesen und abgestrahlt, wie für bewegte Objekte. Auf diese Weise kann man hohe Gebäude, Berge oder dergleichen sehr preisgünstig in die Sicherheitsüberwachung des Kurses von Flugzeugen integrieren. In der Schiffahrt können entsprechend ausgestattete Funkbojen gefährliche Annäherungen von Schiffen an Untiefen vermeiden.

Ein Einsatz der Erfindung ist wegen der hohen Auflösung der GPS-Lagedaten auch in Verbindung mit Landfahrzeugen sinnvoll (z.B. frühzeitige Erkennung von Geisterfahrern auf Autobahnen).

Vorteilhafte Weiterbildungen der Erfindung sind in Unteransprüchen angegeben.

Überträgt man gemäß Anspruch 2 nicht nur die Lagedaten der Objekte sondern auch deren Kursdaten (Bewegungsrichtung, Bewegungsgeschwindigkeit), so kann man schon nach Empfang eines einzigen Bahndatensatzes die zukünftige Bewegung des zu überwachenden Objektes gut abschätzen.

Die Weiterbildung der Erfindung gemäß Anspruch 3 ist im Hinblick auf das Vermeiden von Überlappungen in den auf einem gemeinsamen VHF-Kanal übertragenen Bahndatensignalen von Vorteil. Die Steuerung der Sendezeiten erleichtert es dem Führer eines Objektes zudem, bei zwei bewegten Objekten rasch mit dem Führer des anderen Objektes Funkkontakt aufzunehmen, um den jeweils einzuschlagenden Ausweichkurs abzusprechen.

Dabei wird mit der Weiterbildung der Erfindung gemäß Anspruch 4 auf einfache Weise die Gefahr reduziert, daß zwei Objekte gleichzeitig dieselbe Sendezeitscheibe benutzen, denn die Zuteilung der verschiedenen Funkkanäle, über welche der Sprechverkehr für die verschiedenen Objekte (Flugzeuge) erfolgt, erfolgt durch die Flugüberwachung ebenfalls so, daß keine Doppelbelegung von Kanälen vorkommt.

Auch die Weiterbildung der Erfindung gemäß Anspruch 5 dient dazu, Überlappungen in von den verschiedenen Objekten ausgestrahlten Lagedatensätzen zu vermeiden.

Bei einer Einrichtung gemäß Anspruch 6 wird dem Führer des bewegten Objektes zusammen mit einer Warnung auch gleich ein Vorschlag für eine Kursänderung unterbreitet, der unter Berücksichtigung der Luftfahrt- oder Schiffahrts-Ausweichregelungen erstellt ist und dem Fahrzeugführer ein rasches und richtiges Reagieren in der gegebenen Gefahrensituation ermöglicht.

Nachstehend wird die Erfindung anhand von Ausführungsbeispielen unter Bezugnahme auf die Zeichnung näher erläutert. In dieser zeigen:
- Figur 1:: eine schematische Darstellung der Abstandsüberwachung zwischen in einem gemeinsamen Verkehrsraum fliegenden Flugzeugen;
- Figur 2:: ein Blockschaltbild einer Überwachungseinheit, wie sie von jedem der in Figur 1 gezeigten Flugzeuge getragen wird;
- Figur 3:: ein Blockschaltbild einer Funkboje, mit welcher besondere Hindernisse für bewegte Objekte markiert werden können;
- Figur 4:: ein Blockschaltbild eines Datenprüfkreises der in Figur 2 wiedergegebenen Überwachungseinheit;
- Figur 5:: ein Flußdiagramm eines Hauptprogrammes, nach welchem ein Überwachungsrechner der Überwachungseinheit nach Figur 2 arbeitet;
- Figur 6:: ein Flußdiagramm einer Unterroutine des Hauptprogrammes nach Figur 5, welche zum Einlesen neuer Bahndatensätze dient; und
- Figur 7:: ein Flußdiagramm einer Unterroutine des Hauptprogrammes nach Figur 5, welche zum Ermitteln eines Vorschlages für einen Ausweichkurs dient.

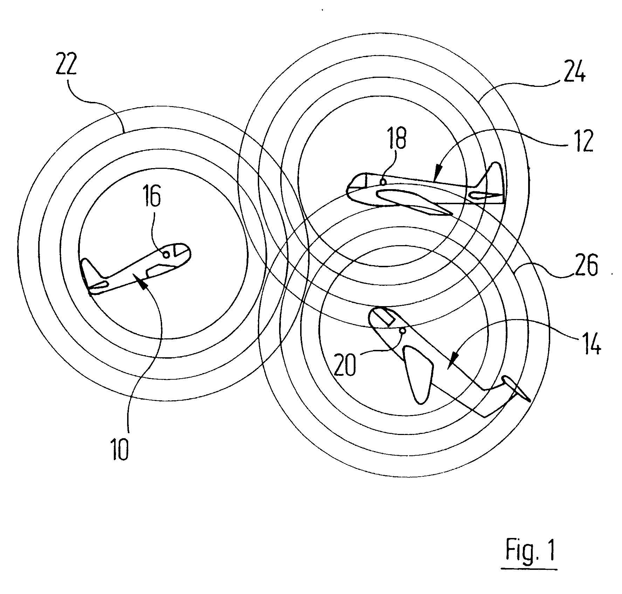

In Figur 1 sind drei Flugzeuge 10, 12, 14 wiedergegeben, die sich auf unterschiedlichen Kursen durch einen Luftraum bewegen. Die Flugzeuge 10, 12, 14 haben Abstands-Überwachungseinheiten 16, 18, 20, die einerseits laufend Objektdaten auf einer VHF-Frequenz senden (angedeutet durch beispielhafte Wellenfronten 22, 24, 26), welche Informationen über die Identität des Flugzeuges, seine Bauart, seine Position und seinen Kurs enthalten. Umgekehrt empfangen die Überwachungseinheiten 16, 18, 20 auf der gemeinsamen VHF-Frequenz Objektdaten von den anderen im betrachteten Luftraum befindlichen Flugzeugen.

Wie später noch genauer beschrieben wird, umfassen die Objektdaten insbesondere den Objektstandort, die Höhe des Objektes über NN., die Richtung, in welcher sich das Objekt bewegt, die Geschwindigkeit, mit der sich das Objekt bewegt, die Zeit der Absendung der Objektdaten vom Objekt, einen Objektidentifizierungscode, Angaben zum Objekttyp und den VHF-Kanal, auf welchem Funksprechverkehr mit dem Objekt abgewickelt wird.

Wie nachstehend noch genauer beschrieben wird, ermitteln die Überwachungseinheiten der verschiedenen Flugzeuge, ausgehend von der eigenen Position und dem eigenen Kurs und den Positionen und Kursen der anderen Flugzeuge, ob eine gefährliche Annäherung an ein anderes Flugzeug droht.

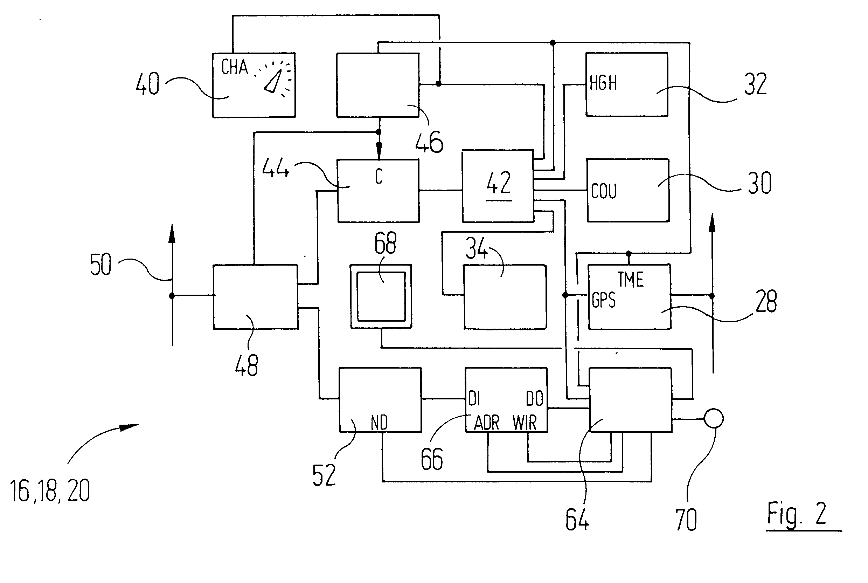

Figur 2 zeigt Einzelheiten des Aufbaus einer der Überwachungseinheiten 16, 18, 20.

Die Überwachungseinheiten 16, 18, 20 umfassen jeweils eine GPS-Einheit 28, die an einem ersten Ausgang "GPS" die Lagekoordinaten des Flugzeuges bereitstellt, wie es sich aus dem Laufzeitvergleich von Standard-Uhrensignalen ergibt, welche von verschiedenen im Weltraum fest positionierten Navigationssatelliten abgestrahlt wird. An einem weiteren Ausgang TME stellt die GPS-Einheit 28 ein hochgenaues Echtzeitsignal bereit.

Zu einer Überwachungseinheit gehört ferner jeweils ein Kursfühler 30, der ein dem momentan eingeschlagenen Kurs des Flugzeuges entsprechendes digitales Kurssignal COU bereitstellt. Dieses Signal kann z.B. von dem im Flugzeug eingebauten Kreiselkompaß abgeleitet sein.

Ferner umfaßt jede Überwachungseinheit einen Höhenfühler 32, der ein der Flughöhe des Flugzeuges zugeordnetes Höhensignal HGH bereitstellt. Dieses Signal ist wiederum ein digitales Signal und wird von einem entsprechend ausgerüste ten Höhenmesser des Flugzeuges bereitgestellt.

In einem Festwertspeicher 34 sind die Zulassungsnummer und der Typ des betrachteten Flugzeuges einprogrammiert.

Ein VHF-Funksprechgerät 40 des Flugzeuges stellt ein digitales Ausgangssignal bereit, welches dem eingestellten VHF-Kanal entspricht. Hierzu ist das Funksprechgerät 40 mit einer Kanalausgabe CHA ausgestattet, die mit dem Ausgang eines mit dem Kanalwähler gekoppelten digitalen Stellungsgebers verbunden ist.

Ein Verkettungskreis 42 setzt die verschiedenen Zeichenketten, welche von der GPS-Einheit 28, dem Kursfühler 30, dem Höhenfühler 32, dem Festwertspeicher 34 und dem Funksprechgerät 40 bereitgestellt werden, zu einer einzigen Zeichenkette zusammen, wobei zwischen die einzelnen Zeichenketten Trennzeichen eingefügt werden und eine Kopfzeichenkette vorangestellt wird. Die so erhaltene Zeichenkette wird auf einen Sendekreis 44 gegeben.

Der Sendekreis 44 arbeitet gesteuert durch einen Sendesteuerkreis 46. Letzterer erhält an einem ersten Eingang das Zeit-Ausgangssignal TME der GPS-Einheit 28 und an einem zweiten Ausgang das Kanalidentifizierungssignal CHA, welches vom Funksprechgerät 40 abgegeben wird. Unter Verwendung des letztgenannten Signales legt der Sendesteuerkreis 46 ein vom eingestellten Funksprechkanal abhängendes Sende-Zeitfenster fest. Innerhalb dieses Sendezeitfensters wird der Sendesteuerkreis 46 aktiviert und setzt dann die ihm überstellte Zeichenkette in serielle Darstellung um, moduliert mit dieser Zeichenkette ein VHF-Signal fest vorgegebener Standard-Leistung und übermittelt dieses modulierte VHF-Signal an eine Sende/Empfangsweiche 48, deren Ausgang mit einer Antenne 50 verbunden ist. Das Arbeiten der Sende/Empfangsweiche 48 erfolgt wiederum gesteuert durch das Ausgangssignal des Sendesteuerkreises 46.

Alternativ kann man die Zuteilung der Sendezeitscheibe auch in Abhängigkeit von der Zulassungsnummer des betrachteten Objektes vornehmen, und in weiterer Abwandlung kann die Zuteilung auch sowohl in Abhängigkeit (oder teilweiser Abhängigkeit) von dem eingestellten VHF-Kanal und von der Zulassungsnummer erfolgen.

In denjenigen Zeitspannen, in denen kein Ausgangssignal des Sendesteuerkreises 46 vorliegt, verbindet die Sende/ Empfangsweiche 48 die Antenne 50 mit einem Empfangskreis 52.

Die Antenne 50 hat eine der Kugelform nahekommende Richtcharakteristik.

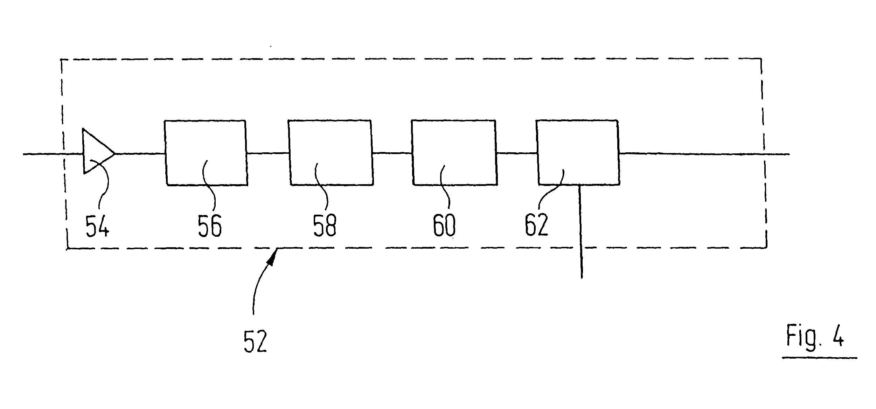

Wie aus Figur 4 ersichtlich, umfaßt der Empfangskreis 52 einen Eingangsverstärker 54. Dessen Ausgang ist mit dem Eingang eines Amplitudendiskriminators 56 verbunden, welcher nur diejenigen Signale auf seinen Ausgang durchlaufen läßt, deren Amplitude größer ist als ein vorgegebener Schwellwert. Dieser Schwellwert ist so gewählt, daß Signale, die von anderen Flugzeugen empfangen werden, die sich in größerer Entfernung als ein vorgegebener Abstand von beispielsweise 60 Meilen befinden, unterdrückt werden. Um eine solche direkte Zuordnung zwischen Signalstärke und Flugzeugabstand zu gewährleisten, haben - wie schon angesprochen - die Sendekreise 44 aller von den verschiedenen Flugzeugen getragenen Überwachungseinheiten gleiche Standard-Sendeleistung, und die sowohl Sendezwecken als auch Empfangszwecken dienenden Antennen 50 der verschiedenen Überwachungseinheiten haben eine der Kugelcharakteristik möglichst nahekommende Arbeitscharakteristik.

Diejenigen Signale, die zum Ausgangs des Amplitudendiskriminators 56 durchlaufen und somit Flugzeugen entsprechen, die sich in vorgegebener näherer Umgebung des betrachteten Flugzeuges befinden, gelangen auf einen Demodulator 58. Dieser setzt die einlaufenden VHF-Signale wieder in serielle Datensignale um.

An den Ausgang des Demodultors 58 ist ein Seriell/ParallelUmsetzer 60 angeschlossen. An dessen Ausgang wird somit eine Zeichenkette erhalten, die Ort, Kurs, Flughöhe, Identifizierungsnummer und Bauart sowie Funksprechkanal eines anderen in der Nähe befindlichen Flugzeuges ebenso umfaßt wie den genauen Zeitpunkt der Absendung dieser Daten. Der Ausgang des Umsetzers 60 ist mit dem Eingang eines Prüfkreises 62 verbunden. Dieser prüft, ob die erhaltene Zeichenkette vollständig oder fehlerhaft ist. Fehlerhafte Zeichenketten können sich z.B. durch fehlerhafte Signalübertragung und/oder Überlappung von Datensätzen ergeben, welche durch zufälliges Arbeiten der Funksprechgeräte 40 zweier Flugzeuge auf derselben Frequenz ergeben können.

Das Erkennen von Fehlern kann an Hand von Plausibilitätsbetrachtungen (z.B. Vergleich des übertragenen Flugzeugtyps mit einer Liste aller Flugzeugtypen) oder an Hand von Prüfbits erfolgen, die nach einem vorgegeben Algorithmus aus der zu übertragenden Zeichenkette sendeseitig berechnet werden und zur Zeichenkette hinzugefügt werden, sodaß empfängerseitig ein Vergleich der übermittelten Prüfbits mit dort nach dem gleichen Algorithmus berechneten Vergleichsprüfbits erfolgen kann.

An einem Ausgang ND stellt der Prüfkreis 62 bzw. der Empfangskreis 52 immer dann ein Signal bereit, wenn in ihm ein fertiger Datensatz liegt. Die Art dieses Ausgangssignales läßt erkennen, ob es sich um einen fehlerfreien oder einen fehlerbehafteten Datensatz handelt, wobei das Signal zugleich die Art des Fehlers erkennen läßt. Dieses Signal ND wird auf einen Steuereingang eines Prüfrechners 64 gegeben.

Der Prüfrechner 64 entscheidet, ob der erhaltene Datensatz verworfen oder weiterverwertet werden soll. Im letztgenannten Falle aktiviert der Prüfrechner 64 eine Schreib/ Lese-Steuerklemme W/R eines Objektdatenspeichers 66. Dessen Dateneingangsklemme DI ist mit dem Ausgang des Prüfkreises 62 verbunden.

Durch entsprechende Ansteuerung der Schreib/Lese-Steuerklemme W/R kann der Prüfrechner 64 Daten von der Datenausgangsklemme DO des Objektdatenspeichers 66 übernehmen.

An eine Adressierklemme ADR des Objektdatenspeichers 66 legt der Prüfrechner 64 jeweils ein die für das Schreiben bzw. Lesen auszuwählende Speicherzelle charakteristisches Signal.

Weitere Dateneingänge des Prüfrechners 64 sind mit den Ausgänen der GPS-Einheit 28 verbunden.

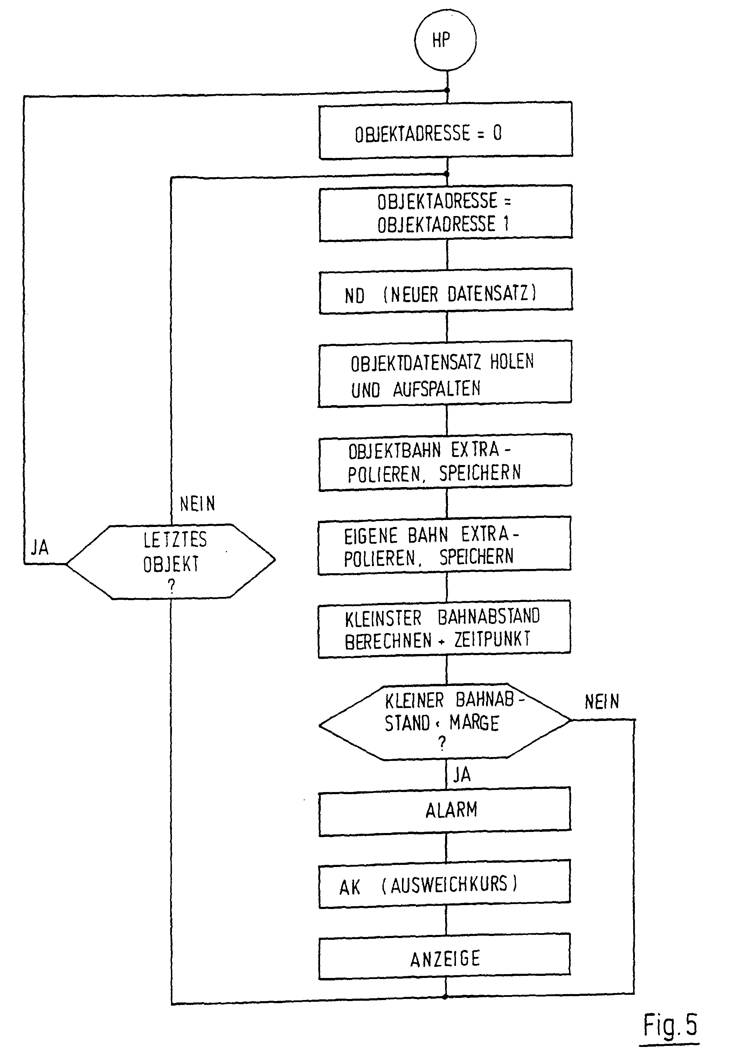

Wie aus Figur 5 ersichtlich, arbeitet der Prüfrechner 64 so, daß er innerhalb einer Schleife, in welcher die verschiedenen Objektbahnen vorausberechnet und die jeweiligen kleinsten Abstände zur eigenen vorausberechneten Bahn ermittelt werden, ständig seinen mit dem Ausgang des Prüfkreises 62 verbundenen Eingang daraufhin abfragt, ob ein neuer Objektdatensatz im Prüfkreis 62 vorliegt.

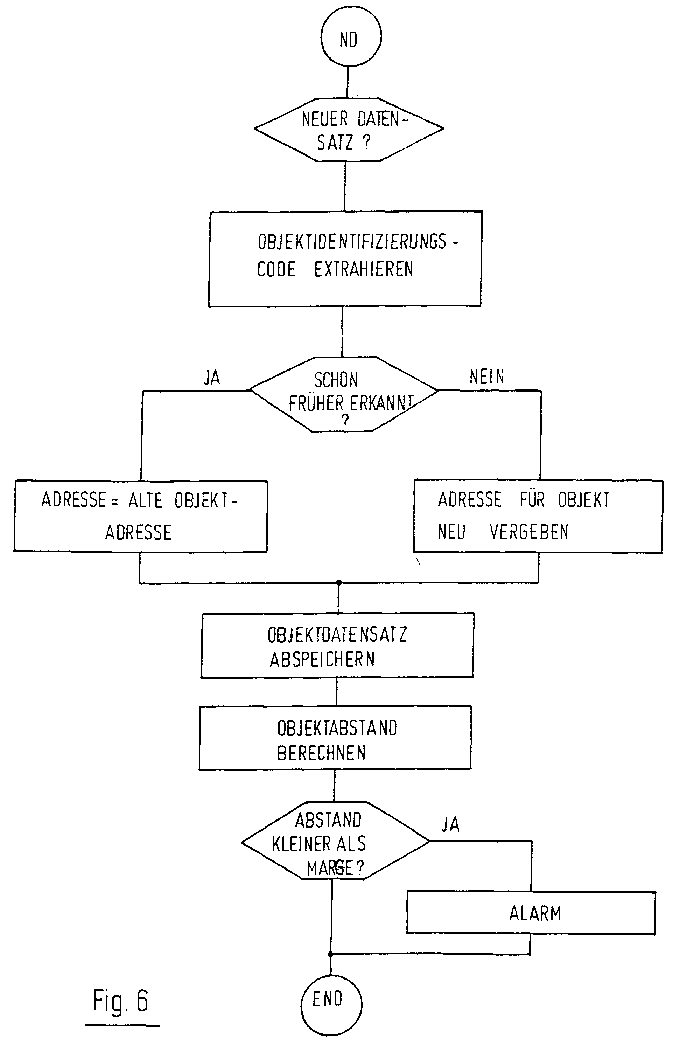

Ist dies der Fall, ermittelt der Rechner (vgl. die Unterroutine von Figur 6), wo dieser Datensatz in dem Objektdatenspeicher 66 abzulegen ist und ob der Abstand zu dem zu diesem Datensatz gehörenden Objekt kleiner ist als eine vorgegebene Sicherheitsmarge. Ist dies der Fall, aktiviert der Prüfrechner 64 einen Alarm und gibt eine entsprechende Anzeige sowie einen Vorschlag für ein Ausweichmanöver auf einem Bildschirm 68 aus.

Liegt eine derartige direkte Gefahrensituation nicht vor, so arbeitet der Prüfrechner 64 gemäß seinem Hauptprogramm weiter. In diesem lädt der Prüfrechner die verschiedenen Objektdatensätze aus dem Objektdatenspeicher 66. Für jeden Objektdatenstatz wird durch Extrapolation der voraussichtlich von dem zugeordneten Flugzeug durchlaufene Weg berechnet und mit dem durch Extrapolation der eigenen Lagedaten und Kursdaten berechneten Kurs verglichen. Der kleinste Abstand zwischen diesen beiden Kursen wird ermittelt, und liegt dieser Abstand wieder unter einer vorgegebenen Sicherheitsmarge, erfolgt zum einen Aktivierung der Alarmeinheit 70 und eine entsprechende Ausgabe auf dem Bildschirm 68.

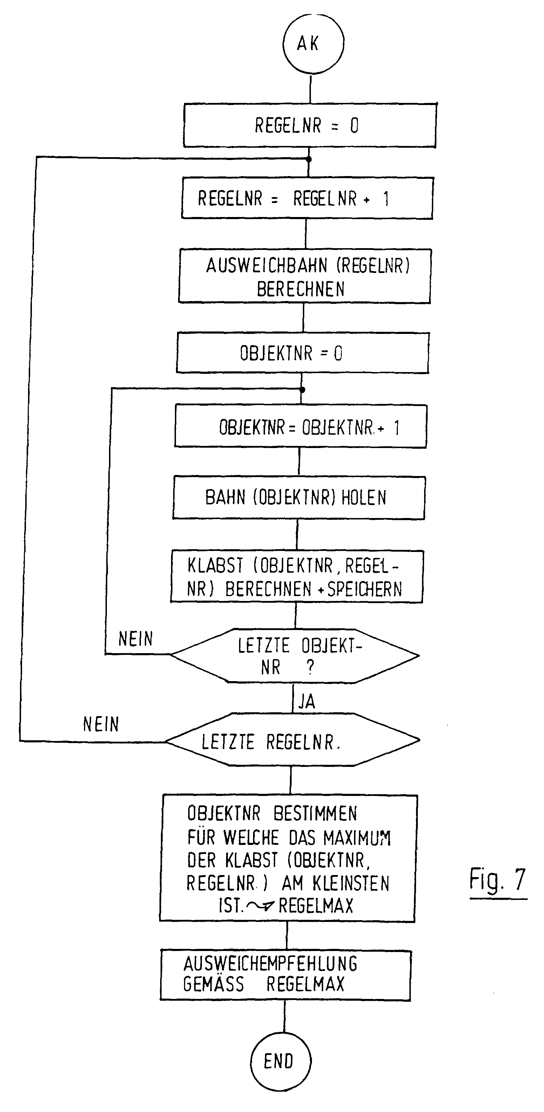

Der Prüfrechner 64 macht hierbei zugleich einen Vorschlag für eine Kurskorrektur, der den gebräuchlichen Ausweichregeln Rechnung trägt. Außerdem wird bei dem Ausweichvorschlag schon berücksichtigt, ob durch den vorgeschlagenen geänderten Kurs möglicherweise eine unzulässige Annäherung an ein anderes Objekt erfolgt. Siehe hierzu das Flußdiagramm der Unterroutine für die Ermittlung des Ausweichvorschlages, das in Figur 7 wiedergegeben ist.

Das oben beschriebene Prinzip zur Überwachung des Abstandes zwischen verschiedenen in einem gemeinsamen Luftraum befindlichen Flugzeugen läßt sich gleichermaßen übertragen auf die Kollisionsverhinderung zwischen Schiffen.

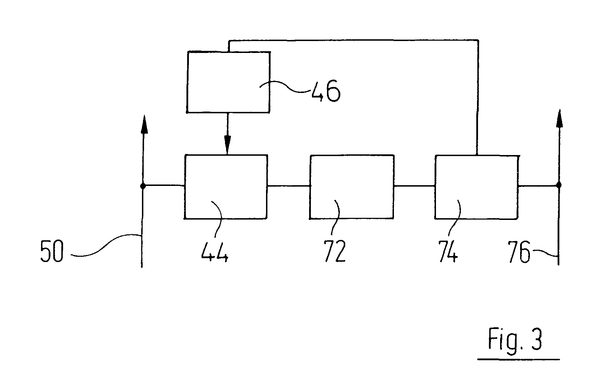

Ferner kann man mit dem oben geschilderten Prinzip auch Kollisionen mit feststehenden Hindernissen vermeiden, z.B. Bergen und hohen Gebäuden, wenn es sich bei den Objekten um Flugzeuge handelt oder Untiefen oder gesperrte Bereiche des Meeres, wenn es sich um Schiffe handelt. Hierzu werden die Hindernisse mit Funkbojen versehen, welche ähnlich arbeiten wie der aktive oder sendende Teil einer Überwachungseinheit, wie sie obenstehend unter Bezugnahme auf Figur 2 beschrieben wurde. Da die Lage des Hindernisses aber unveränderlich ist, kann man einen entsprechenden Objektdatensatz einfach in einem Festwertspeicher 72 ablegen (vgl. Figur 3), der mit dem Eingang des Sendekreises 44 verbunden ist. Da die Lage des Hindernisses bekannt ist und aus Kostengründen in der Funkboje keine GPS-Einheit enthalten ist, erfolgt die Zuteilung einer Zeitscheibe in fester Weise, wobei das Synchronisieren des Sendesteuerkreises 46 auf die Echtzeit durch eine Funkuhr 74 erfolgt, die an eine Antenne 76 angeschlossen ist.

Man erkennt, daß man mit Funkbojen der in Figur 3 gezeigten Art auf sehr preiswerte Weise Hindernisse in eine leitstellenunabhängige Kursüberwachung von bewegten Objekten integrieren kann.

## Patentansprüche

1. Einrichtung zur Überwachung des Abstandes zweier Objekte (10, 12, 14), von denen sich mindestens eines bewegt, mit von den Objekten (10, 12, 14) getragenen Sendeeinheiten (44, 50) und mindestens von den bewegten Objekten (10, 12, 14) getragenen Empfangseinheiten (50, 52), wobei die Sendeeinheiten (44, 50) Lagedatensignale für die sie tragenden Objekte (10, 12, 14) und ein dem tragenden Objekt zugeordnetes Identifizierungssignal senden, und die Empfangseinheiten (50, 52) die Lagedatensignale und Objektidentifizierungssignale der anderen Objekte empfangen, wobei die bewegten Objekte (10, 12, 14) jeweils eine GPS-Einheit (28) tragen, welche die Lagedatensignale bereitstellt, und die Sendeeinheiten (44, 50) und die Empfangseinheiten (50, 52) im VHF-Bereich arbeiten, und zumindest die bewegten Objekte (10, 12, 14) Überwachungsrechner (64) tragen, **dadurch gekennzeichnet, daß** die Sendeeinheiten (44, 50) und die Empfangseinheiten (50, 52) eine Antenne (50) mit im wesentlichen kugelförmiger Charakteristik der Empfangsempfindlichkeit bzw. der abgestrahlten Sendeleistung enthalten; daß die Überwachungsrechner (64) aus den Lagedatensignalen des betrachteten Objektes und den empfangenen Lagedatensignalen der anderen Objekte den Abstand der beiden Objekte (10, 12, 14) berechnen; und daß die Sendeeinheiten (44, 50) gleiche Sendeleistung haben und die Empfangseinheiten (50, 52) mit einem Diskriminatorkreis (56) verbunden sind, welcher empfangene Signale verwirft, deren Amplitude kleiner ist als ein vorgegebener Schwellwert.

2. Einrichtung nach Anspruch 1, **dadurch gekennzeichnet, daß** die Sendeeinheiten (44, 50) ferner Kursdatensignale des Objektes (10, 12, 14), von dem sie getragen sind, aussenden und daß die Überwachungsrechner (64) aus den Lagedatensignalen und Kursdatensignalen des betrachteten Objektes und den empfangenen Lagedatensignalen und Kursdatensignalen des anderen Objektes die zukünftige Bewegung der beiden Objekte extrapolieren und zusätzlich ein Warnsignal erzeugen, wenn sich die extrapolierten Bahnen näherkommen als eine vorgegebene Strecke.

3. Einrichtung nach Anspruch 1 oder 2, **dadurch gekennzeichnet, daß** jeder Sendeeinheit (44, 50) eine vorgegebene Sendezeitscheibe, bezogen auf die Normalzeit, zugeteilt ist, wobei die Normalzeit vorzugsweise von der GPS-Einheit (28) bereitgestellt wird.

4. Einrichtung nach Anspruch 3, **dadurch gekennzeichnet, daß** die Sendezeitscheibe in Abhängigkeit von einer dem Objekt (10, 12, 14) jeweils zugeteilten Sprechfunkfrequenz (40) vorgegeben ist.

5. Einrichtung nach Anspruch 3 oder 4, **dadurch gekennzeichnet, daß** die Sendezeitscheibe in Abhängigkeit von einer dem Objekt (10, 12, 14) jeweils zugeteilten Zulassungsnummer vorgegeben ist.

6. Einrichtung nach einem der Ansprüche 2 bis 5, **dadurch gekennzeichnet, daß** der Überwachungsrechner (64), ausgehend von den extrapolierten Bahnen der beiden Objekte (10, 12, 14), einen Vorschlag für eine Kursänderung macht, durch welchen eine Kollision vermieden wird.

## Claims

1. Device for monitoring the distance between two objects (10, 12, 14), at least one of which is moving, having transmission units (44, 50) carried by the objects (10, 12, 14) and receiving units (50, 52) carried at least by the moving objects (10, 12, 14), wherein the transmission units (44, 50) transmit position data signals for the carrying objects (10, 12, 14) and an identification signal associated with the carrying object, and the receiving units (50, 52) receive the position data signals and object identification signals of the other objects, wherein the moving objects (10, 12, 14) each carry a GPS unit (28), which supplies the position data signals, and the transmission units (44, 50) and the receiving units (50, 52) operate in the VHF range, and at least the moving objects (10, 12, 14) carry monitoring computers (64), **characterized in that** the transmission units (44, 50) and the receiving units (50, 52) comprise an antenna (50) with a substantially omnidirectional characteristic of the receiving sensitivity and/or the emitted transmitting power; that the monitoring computers (64) from the position data signals of the object in question and the received position data signals of the other objects calculate the distance between the two objects (10, 12, 14); and that the transmission units (44, 50) have identical transmitting power and the receiving units (50, 52) are connected to a discriminator circuit (56), which rejects received signals of an amplitude lower than a preselected threshold value.

2. Device according to claim 1, **characterized in that** the transmission units (44, 50) further transmit course data signals of the object (10, 12, 14), by which they are carried, and that the monitoring computers (64) from the position data signals and course data signals of the object in question and the received position data signals and course data signals of the other object extrapolate the future movement of the two objects and additionally produce an alarm signal when the extrapolated paths come closer than a preset distance to one another.

3. Device according to claim 1 or 2, **characterized in that** each transmission unit (44, 50) is allocated a preset transmission time slice in relation to the standard time, wherein the standard time is preferably supplied by the GPS unit (28).

4. Device as claimed in claim 3, wherein the transmission time slice is predetermined in dependence upon a radiotelephone frequency (40) allocated in each case to the object (10, 12, 14).

5. A device according to claim 3 or 4, **characterized in that** the transmission time slice is predetermined in dependence upon a registration number allocated in each case to the object (10, 12, 14).

6. Device according to claims 2 to 5, **characterized in that** the monitoring computer (64) on the basis of the extrapolated paths of the two objects (10, 12, 14) proposes a change of course, by means of which a collision is avoided.

## Revendications

1. Dispositif pour surveiller l'écart entre deux objets (10, 12, 14) dont au moins un se déplace, comprenant des unités émettrices (44, 50) portées par les objets (10, 12, 14) et des unités réceptrices (50, 52) portées au moins par les objets (10, 12, 14) mobiles, sachant que les unités émettrices (44, 50) émettent des signaux relatifs aux données de position pour les objets (10, 12, 14) qui les portent et un signal d'identification associé à l'objet porteur, et que les unités réceptrices (50, 52) reçoivent les signaux relatifs aux données de position et les signaux d'identification de l'objet des autres objets, sachant que les objets (10, 12, 14) mobiles portent chacun une unité GPS (28) qui fournit les signaux relatifs aux données de position et que les unités émettrices (44, 50) et les unités réceptrices (50, 52) fonctionnent en mode VHF, et qu'au moins les objets (10, 12, 14) mobiles portent des calculateurs de surveillance (64), **caractérisé en ce que** les unités émettrices (44, 50) et les unités réceptrices (50, 52) comprennent une antenne (50) dont la caractéristique respectivement de la sensibilité de réception et de la puissance d'émission est essentiellement sphérique, **en ce que** les calculateurs de surveillance (64) calculent l'écart entre deux objets (10, 12, 14) à partir des signaux relatifs aux données de position de l'objet considéré et des signaux relatifs aux données de position reçus des autres objets, et **en ce que** les unités émettrices (44, 50) ont la même puissance d'émission et les unités réceptrices (50, 52) sont reliées à un circuit de discrimination (56) qui rejette les signaux dont l'amplitude est inférieure à une valeur seuil préalablement définie.

2. Dispositif selon la revendication 1, **caractérisé en ce que** les unités émettrices (44, 50) émettent en outre des signaux relatifs à la trajectoire de l'objet (10, 12, 14) qui les porte, et **en ce que** les calculateurs de surveillance (64) extrapolent, à partir des signaux relatifs aux données de position et des signaux relatifs à la trajectoire de l'objet considéré et des signaux relatifs aux données de position et des signaux relatifs à la trajectoire reçus des autres objets, le déplacement futur des deux objets et produisent en outre un signal d'avertissement lorsque les trajectoires extrapolées se rapprochent davantage qu'une distance préalablement définie.

3. Dispositif selon la revendication 1 ou 2, **caractérisé en ce qu'**à chaque unité émettrice (44, 50) est attribué un créneau d'émission rapporté à l'heure légale, l'heure légale étant de préférence déterminée par l'unité GPS (28).

4. Dispositif selon la revendication 3, **caractérisé en ce que** le créneau d'émission est préalablement défini en fonction d'une fréquence de radiotéléphonie (40) qui est chaque fois attribuée à l'objet (10, 12, 14).

5. Dispositif selon la revendication 3 ou 4, **caractérisé en ce que** le créneau d'émission est préalablement défini en fonction d'un numéro d'homologation qui est chaque fois attribué à l'objet (10, 12, 14).

6. Dispositif selon l'une des revendications 2 à 5, **caractérisé en ce que** le calculateur de surveillance (64) propose une modification de trajectoire à partir des trajectoires extrapolées des deux objets (10, 12, 14), qui permet d'éviter une collision.
